# EUROPEAN PATENT SPECIFICATION

(11) **EP 3 613 248 B1**
(45) Date of publication and mention of the grant of the patent: **25.12.2024**
(21) Application number: 18818468.3
(22) Date of filing: 29.05.2018
(51) Int. Cl.: H04W 72/04, H04W 72/02

(54) **SYSTEM AND METHOD FOR INDICATING SCHEDULING GRANTS**
SYSTEM UND VERFAHREN ZUR ANZEIGE VON PLANUNGSGENEHMIGUNGEN
SYSTÈME ET PROCÉDÉ D'INDICATION D'AUTORISATIONS DE PROGRAMMATION

(30) Priority: 14.06.2017 US 201715622786
(43) Date of publication of application: 26.02.2020
(73) Proprietor: Huawei Technologies Co., Ltd., Longgang District Shenzhen, Guangdong 518129 (CN)
(72) Inventor: XIA, Pengfei, San Diego, CA 92130 (US); STIRLING-GALLACHER, Richard, Shenzhen, Guangdong 518129 (CN); LIU, Bin, San Diego, CA 92130 (US)
(74) Representative: Grünecker Patent- und Rechtsanwälte PartG mbB
(86) International application number: PCT/CN2018/088866
(87) International publication number: WO 2018/228179

(56) References cited:
- WO-A1-2014/172515
- WO-A1-2016/120761
- CN-A- 102 754 508
- US-A1- 2013 201 938
- US-A1- 2017 150 519
- HUAWEI ET AL: "UL beam management", vol. RAN WG1, no. Hangzhou, China; 20170515 - 20170519, 14 May 2017 (2017-05-14), XP051272155, Retrieved from the Internet <URL:http://www.3gpp.org/ftp/Meetings_3GPP_SYNC/RAN1/Docs/> [retrieved on 20170514]
- NOKIA ET AL: "UL SRS design considerations in NR", vol. RAN WG1, no. Hangzhou; 20170515 - 20170519, 14 May 2017 (2017-05-14), XP051274106, Retrieved from the Internet <URL:http://www.3gpp.org/ftp/Meetings_3GPP_SYNC/RAN1/Docs/> [retrieved on 20170514]

## Description

### TECHNICAL FIELD

The present disclosure relates generally to a system and method for digital communications, and, in particular embodiments, to a system and method for indicating scheduling grants.

### BACKGROUND

In cellular communications systems, network resources, such as resource blocks (RBs), are granted or allocated to user equipments (UEs) by an access node to allow the UEs to make uplink transmissions. The granted network resources are commonly referred to as resource grants and are indicated to the UEs.

One possible deployment scenario for fifth generation (5G) New Radio (NR) system architecture uses high frequency (HF) (6 gigahertz (GHz) and above, such as millimeter wavelength (mmWave)) operating frequencies to exploit greater available bandwidth and less interference then what is available at the congested lower frequencies. However, pathloss is a significant issue. Beamforming may be used to overcome the high pathloss.

WO 2016/120761 A1 discloses a system and method of Random-Access Response, RAR, messaging when a base station employs narrow beamforming. Multiple RAR messages are successively transmitted from the base station to a User Equipment, UE, before any response to a RAR message is received from the UE.

HUAWEI ET AL, "UL beam management", vol. RAN WG1, no. Hangzhou, China; 20170515 - 20170519, (20170514), 3GPP DRAFT; R1-17066925, 3RD GENERATION PARTNERSHIP PROJECT (3GPP) discloses allowing UE to select beamformer for SRS transmission within set of beamformers.

NOKIA ET AL, "UL SRS design considerations in NR", vol. RAN WG1, no. Hangzhou; 20170515 - 20170519, (20170514), 3GPP DRAFT; R1-1708928, 3RD GENERATION PARTNERSHIP PROJECT (3GPP) relates to SRS resource configuration, wherein for precoded SRS, multiple SRS resources can be configured. The precoder can be reported by explixit report or implicit indication scheme.

WO 2014/172515 A1 discloses methods and apparatus for signaling information via the selection of resources used for an uplink transmission.

### SUMMARY

The invention provides a method for transmitting information according to claim 1, a method for operating an access node according to claim 3, a system according to claim 5 and an access node according to claim 6. Further embodiments are defined in the dependent claims. Embodiments and examples not falling within the scope of the claims are not to be considered part of the invention and are included for illustrative purposes only.

### BRIEF DESCRIPTION OF THE DRAWINGS

For a more complete understanding of the present disclosure, and the advantages thereof, reference is now made to the following descriptions taken in conjunction with the accompanying drawings, in which:
Figure 1 illustrates an example wireless communications system according to example embodiments described herein;
Figure 2 illustrates a diagram of processing by and transmissions from devices participating in allocating and making an uplink transmission;
Figure 3 illustrates communications system highlighting PUSCHs and communications beams used thereby according to example embodiments described herein;
Figure 4A illustrates a flow diagram of example operations occurring in an access node recovering information from a SRS sequence received from a UE according to example embodiments described herein;
Figure 4B illustrates a flow diagram of example operations occurring in a UE transmitting information in a SRS sequence according to example embodiments described herein;
Figure 5 illustrates an example configuration of SRS resources for a UE according to example embodiments described herein;
Figure 6A illustrates a flow diagram of example operations occurring in an access node receiving an uplink transmission from a UE according to example embodiments described herein;
Figure 6B illustrates a flow diagram of example operations occurring in a UE making an uplink transmission according to example embodiments described herein;
Figure 7 illustrates an example scheduling grant information according to example embodiments described herein;
Figure 8 illustrates an example communication system according to example embodiments described herein;
Figures 9A and 9B illustrate example devices that may implement the methods and teachings according to this disclosure; and
Figure 10 is a block diagram of a computing system that may be used for implementing the devices and methods disclosed herein.

### DETAILED DESCRIPTION OF ILLUSTRATIVE EMBODIMENTS

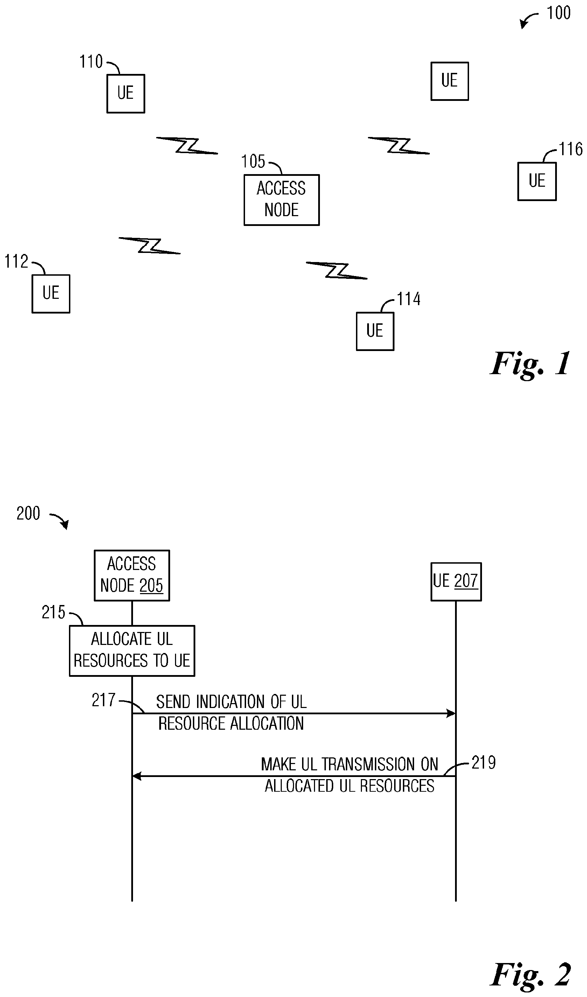

Figure 1 illustrates an example wireless communications system 100. Communications system 100 includes an access node 105 serving a plurality of user equipments (UEs), such as UE 110, UE 112, UE 114, UE 116, and UE 118. Communications intended for or originating from a UE pass through access node 105. In a situation when a UE has a transmission to make, referred to as an uplink transmission, access node 105 allocates one or more network resources to the UE for the uplink transmission, and sends an indication of the one or more allocated network resources to the UE. The one or more allocated network resources may be referred to as a scheduling grant.

Access nodes are also commonly referred to as NodeBs, evolved NodeBs (eNBs), next generation (NG) NodeBs (gNBs), master eNBs (MeNBs), secondary eNBs (SeNBs), master gNBs (MgNBs), secondary gNBs (SgNBs), base stations, access points, remote radio heads, and so on. Similarly, UEs are also commonly referred to as mobiles, mobile stations, stations, terminals, subscribers, users, and the like. While it is understood that communications systems may employ multiple eNBs capable of communicating with a number of UEs, only two eNBs, and two UEs are illustrated for simplicity. While it is understood that communications systems may employ multiple access nodes capable of communicating with a number of UEs, only one access node and five UEs are illustrated for simplicity.

Figure 2 illustrates a diagram 200 of processing by and transmissions from devices participating in allocating and making an uplink transmission. Diagram 200 displays processing by and transmissions from an access node 205 and a UE 207 as the devices participate in allocating and making an uplink transmission.

Access node 205 allocates one or more network resources to UE 207 (block 215). Access node 205 sends an indication of the one or more allocated network resources to UE 207 (event 217). UE 207 receives the indication of the one or more allocated network resources and makes an uplink transmission on the one or more allocated network resources (event 219).

In Third Generation Partnership Project (3GPP) Long Term Evolution (LTE) compliant communications systems, network resources allocated for uplink transmissions are referred to as physical uplink shared channel (PUSCH) resources and are allocated by an eNB to a UE. The UE uses the PUSCH resources to transmit uplink data to the eNB. Each PUSCH resource may be one or more physical resource blocks (PRBs). Each PUSCH resource may correspond to a transmit beam at the UE side and a receive beam at the eNB side.

In 3GPP LTE compliant communications systems, it is up to the UE to determine which transmit beam to use when transmitting on the PUSCH resources. Additionally, the eNB determines which receive beam to use when receiving on the PUSCH resources. In the situation when multiple PUSCH resources are allocated to a single UE, the beam pairs (transmit beam at the UE and receive beam at the eNB) used for the multiple PUSCH resources may be different. PUSCH resources are used to transmit uplink data. When a UE has control information, physical uplink control channel (PUCCH) resources are used.

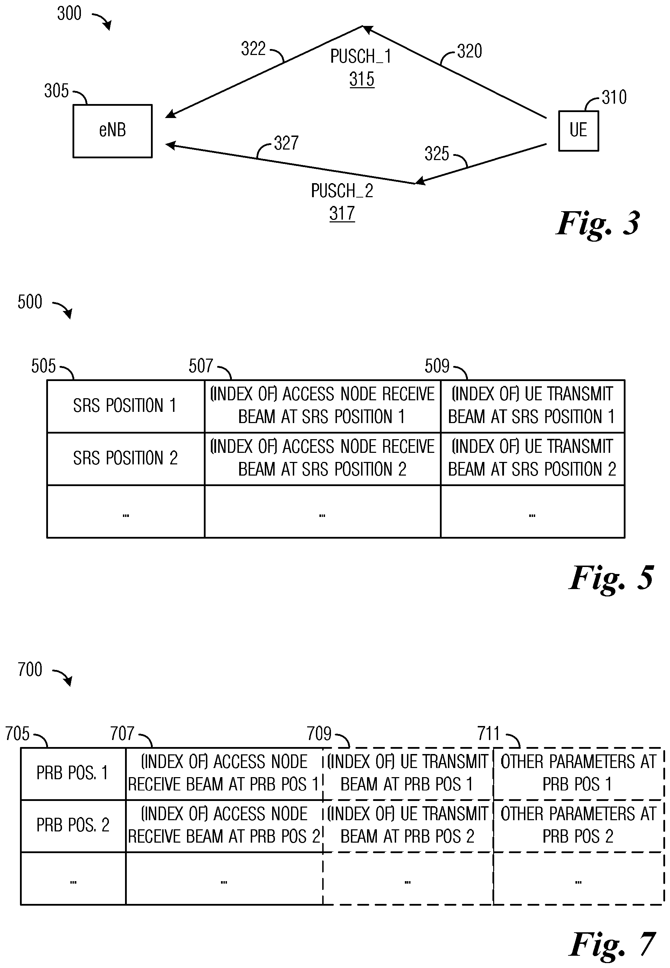

Figure 3 illustrates a communications system 300 highlighting PUSCHs and communications beams used thereby. Communications system 300 includes an eNB 305 serving a UE 310. Also shown in Figure 3 are two PUSCHs, a first PUSCH (PUSCH_1) 315 and a second PUSCH (PUSCH_2) 317. As shown in Figure 3, first PUSCH 315 is transmitted using transmit beam 320 and received using receive beam 322, while second PUSCH 317 is transmitted using transmit beam 325 and received using receive beam 327. The directional nature of the transmit and receive beams help UE 310 transmit and eNB 305 receive the PUSCHs. Although PUCCHs are not shown in Figure 3, the PUCCHs have similar directionality due to the use of transmit and receive beams.

Each PUSCH (or PUCCH) may be characterized by the transmit beam (denoted *υₜᵢ* for the transmit beam of the i-th PUSCH (or PUCCH)) and the receive beam (denoted *υᵣᵢ* for the receive beam of the i-th PUSCH (or PUCCH)). It is noted that the same content may be carried over multiple PUSCH (or PUCCH) resources or different content may be carried over multiple PUSCH (or PUCCH) resources.

In general, a UE with beamforming will have a transmit circuitry chain and a receive circuitry chain. Each transmit circuitry chain may include a baseband processing unit, the output of which is digital-to-analog converted (DAC) to an analog signal. The analog signal may be spatially beamformed to multiple transmit antennas. The beamformed signal may be amplified using a power amplifier (PA) on each antenna and then radiated into the air. Each receive circuitry chain may include multiple receive antennas, which are spatially beamformed and combined. Output of the multiple receive antennas may be analog-to-digital converted (ADC) to digital signals, which are provided to a baseband processing unit.

The transmit circuitry chain corresponds to a transmit beam, while the receive circuitry chain corresponds to a receive beam. Each beam (transmit or receive) may be virtually represented as a beam with a main lobe and multiple side lobes. Ideally, the transmit beam and the receive beam should be fully aligned for every possible beam. In practice, the transmit beam and the receive beams may not be fully aligned. In other words, the main beam gains may be different, the main beam widths may be different, the main beam angles may be different, the side beam gains may be different, and so forth.

In communications systems that are operating at higher frequencies, such as millimeter wavelength (mmWave) communications systems, communications devices generally have a large number of transmit and/or receive antennas that share a smaller number of radio frequency (RF) chains. From the perspective of a communications device, the beamformed transmit and receive beams should have the same (or substantially the same) beam pattern (in terms of peak/non-peak beam direction, peak/non-peak beam gain, peak/non-peak beam width, and so on, for example) in the spatial domain. This means that for each beamformed beam, the beam response on all directions should be the same (or substantially the same) from the point of view of the transmitter and the receiver. This is known as the beam correspondence condition, and when the beam correspondence condition is met, beam correspondence is achieved.

A UE is beam correspondent or achieves beam correspondence, then the UE is able to determine a best transmit beam (i.e., the UE is able to determine a direction, gain, and so on, for a transmission) based on its own best receive beam (the direction, gain, and so forth, of the receive beam) for a particular receiving device, e.g., an eNB. If a UE is not beam correspondent, then the UE may not be able to determine a best transmit beam based on its best receive beam for a particular receiving device. The UE may not be beam correspondent due to a variety of factors, including (but not limited to) hardware calibration mismatch (e.g., different phase shifters), asymmetric interference at the UE side and/or the eNB side of the transmission, and so on. Uncalibrated UEs are examples of UEs without beam correspondence.

According to an example embodiment, a UE is able to include information in sounding reference signal (SRS) sequences transmitted in SRS resources. Typically, the SRS transmission is not information bearing and is used to enable a receiver (e.g., the access node) to perform channel estimation. However, it is possible to include information in the SRS transmission. Information may be implicitly transmitted by a UE when the selects one of N SRS sequences for transmission in SRS resources. The N SRS sequences may be specified in a technical standard or by an operator of the communications system. An access node, upon detecting which one of the N SRS sequences was transmitted by the UE, is able to recover log2(N) bits of information. As an illustrative example, two SRS sequences may be allocated to a UE. The UE may select a first SRS sequence to perform channel sounding as well as feedback a bit "1", while a second SRS sequence may be selected to perform channel sounding as well as feedback a bit "0". Bits 1 or 0 may be used to select a receive beam at the access node, for example.

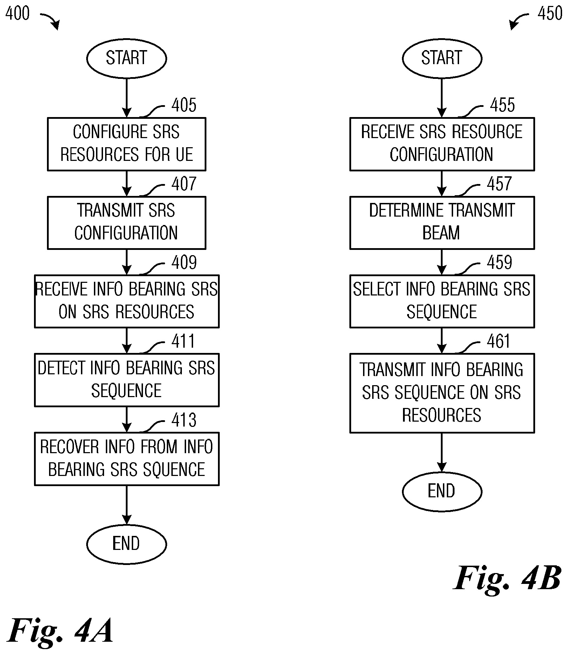

Figure 4A illustrates a flow diagram of example operations 400 occurring in an access node recovering information from a SRS sequence received from a UE. Operations 400 may be indicative of operations occurring in an access node as the access node recovers information from a SRS sequence received from a UE.

Operations 400 begin with the access node configuring SRS resources for the UE (block 405). Configuring SRS resources for a UE may include providing the UE with at least one of the following:
- Position information of the SRS resources;
- Information (e.g., index) about a receive beam(s) used by the access node on the SRS resources; and
- Information (e.g., index) about a transmit beam(s) used by the UE on the SRS resource.
The access node may select a receive beam by itself or based on UE recommendation.

Figure 5 illustrates an example configuration of SRS resources 500 for a UE. Configuration of SRS resources 500 is presented in tabular form. Other representations of configuration of SRS resources 500 are possible. Configuration of SRS resources 500 may include multiple entries, one per SRS resource. An example entry of configuration of SRS resources 500 includes position information of a SRS resource (e.g., SRS position 505), an index of an access node receive beam (e.g., receive beam index 507), and an index of a UE transmit beam (e.g., transmit beam index 509).

Referring back now to Figure 4A, the access node transmits the SRS configuration (block 407). The SRS configuration may be specifically addressed to the UE. Alternatively, the SRS configuration may be broadcast. The access node receives information bearing SRS on the SRS resources (block 409). The information bearing SRS is transmitted by the UE on the SRS resources as configured by the access node. The access node detects information bearing SRS sequence in the SRS resources (block 411). The access node recovers information from the information bearing SRS sequence (block 413). As an illustrative example, N SRS sequences are available to the UE for transmission on the SRS resources and the UE selects one of the N SRS sequences for transmission. The access node detects which one of the N SRS sequences was received and is able to recover log2(N) bits of information from the received SRS sequence. The N SRS sequences available to the UE may be specified in a technical standard, an operator of the communications system, signaled to the UE by the access node, or determined by mutual collaboration between the UE and the access node.

Figure 4B illustrates a flow diagram of example operations 450 occurring in a UE transmitting information in a SRS sequence. Operations 450 may be indicative of operations occurring in a UE as the UE transmits information in a SRS sequence.

Operations 450 begin with the UE receiving a SRS resource configuration from an access node (block 455). The SRS resource configuration may include position information of SRS resources, information about a receive beam used by the access node to receive the SRS sequence, and/or information about a transmit beam used by the UE to transmit the SRS sequence. The UE determines a transmit beam (block 457). The UE may determine the transmit beam based on information about a receive beam used by the access node to receive the SRS sequence included in the SRS resource configuration. The UE may use the information about a transmit beam to be used by the UE as selected by the access node (also included in the SRS resource configuration). The UE may use the transmit beam selected by the access node. Alternatively, the UE uses information about the transmit beam selected by the access node to select a transmit beam. In other words, the UE uses the transmit beam selected by the access node to assist in making a decision about which transmit beam to use. The UE selects an information bearing SRS sequence (block 459). As an example, the UE selects one of N SRS sequences, which will enable the UE to transmit log2(N) bits of information with the SRS sequence. The UE transmits the SRS sequence on the SRS resources (block 461).

According to an example embodiment, a scheduling grant including communications beam information is provided to assist in uplink transmissions. A typical scheduling grant will include location information, such as a location of one or more PRBs allocated to the UE for an uplink transmission. The location of the one or more PRBs also informs the UE of the position(s) of associated DMRS resource(s). In addition to the location information, the scheduling grant includes communications beam information that is helpful to the UE in determining which transmit beam(s) to use for the uplink transmission. The scheduling grant may include other information, such as a modulation and coding scheme (MCS) to use, a transmission scheme to use, and so on.

The inclusion of communications beam information, such as information regarding a receive beam used at an access node to receive the uplink transmission, provides support for uplink transmissions with multiple demodulation reference signal (DMRS) resources. An example of the information regarding a receive beam used at an access node includes an index of a receive beam (or indices of receive beams) used at the access node to receive the uplink transmission. Information about the receive beam used at the access node to receive the uplink transmission may provide orientation information, beamwidth information, gain information, and so on, about the receive beam, which may be helpful to the UE when selecting a transmit beam(s) to transmit the uplink transmission. As an example, in a situation where codebook beamforming is used by the access node, knowledge of the index of the receive beam allows the UE to know the orientation of the receive beam used by the access node. The UE may then select a transmit beam to match (or closely match) the orientation of the receive beam.

The inclusion of communications beam information, such as information regarding information regarding a transmit beam used by a UE to transmit the uplink transmission, provides support for uplink transmissions by uncalibrated UEs. The uncalibrated UEs may be uncalibrated due to uncalibrated hardware (analog circuitry in particular) or asymmetric interference. An example of the information regarding a transmit beam used at a UE includes an index of a transmit beam (or indices of transmit beams) used at the UE to transmit the uplink transmission. In the situation when the UE is provided the index of a transmit beam to use to transmit the uplink transmission, the UE may have to use the transmit beam to make the uplink transmission. However, in a situation where the UE can use multiple transmit beams, the UE may select other transmit beams in addition to the transmit beam indicated by the eNB.

The inclusion of communications beam information, such as information regarding information regarding both a receive beam used by an access node to receive the uplink transmission and a transmit beam used by a UE to transmit the uplink transmission, provides support for both uplink transmissions with multiple DMRS resources and uplink transmissions by uncalibrated UEs. Information about the receive beam used at the access node to receive the uplink transmission is used by the UE when selecting a transmit beam(s) (in addition to the transmit beam indicated by the access node) to transmit the uplink transmission.

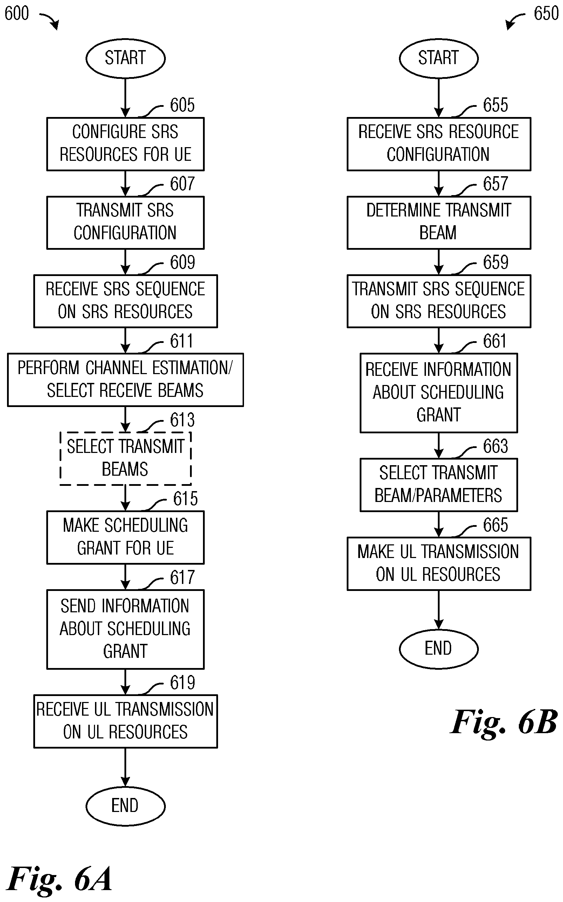

Figure 6A illustrates a flow diagram of example operations 600 occurring in an access node receiving an uplink transmission from a UE. Operations 600 may be indicative of operations occurring in an access node as the access node receives an uplink transmission from a UE.

Operations 600 begin with the access node configuring SRS resources for the UE (block 605). The SRS resource configuration may include position information of SRS resources, information about a receive beam used by the access node to receive the SRS sequence, and/or information about a transmit beam used by the UE to transmit the SRS sequence. The access node transmits the SRS resource configuration (block 607). The access node receives a SRS sequence on SRS resources (block 609). The access node performs channel estimation and receive beam selection in accordance with the received SRS sequence (block 611). In a situation where the SRS sequence is not information bearing, the access node performs channel estimation using the received SRS sequence. The access node also selects a receive beam in accordance with the received SRS sequence. In a situation where the SRS sequence is information bearing, the access code decodes the received SRS sequence and potentially uses the information decoded from the received SRS sequence to help in selecting a received beam. As an example, the information decoded from the received SRS sequence may include one or more suggestions from the UE regarding which receive beam the access node should select. The access node optionally selects a transmit beam for the UE (block 613). The transmit beam selected for the UE may be selected in accordance with the receive beam selected by the access node. The transmit beam selected for the UE may also be selected in accordance with positional information of the access node and the UE. As an example, the access node knows the position of the UE. Once the access node selects its own receive beam, the access node may use the position of the UE along with orientation information derived from the selected receive beam to determine an orientation of a transmit beam of the UE. The access node may then determine an index of a transmit beam that most closely matches the orientation of the determined transmit beam, for example.

The access node makes a scheduling grant for an uplink transmission for the UE (block 615). The scheduling grant includes position information for one or more network resources allocated for the uplink transmission. The access node may allocate one or more network resources, e.g., PRBs, to a UE for the UE to make an uplink data transmission. Each PRB may include a demodulation reference signal (DMRS) resource and a data region. The DMRS resource includes a DMRS that enables channel estimation at the receiver, e.g., the access node, to assist in the demodulating and/or decoding of data included in the data region of the same PRB. The scheduling grant includes position information for the one or more PRBs, and hence, position information of associated DMRS resources and data regions.

The scheduling grant also includes information about a receive beam used by the access node at the one or more network resources. The information about the receive beam used by the access node may comprise an index of the receive beam used by the access node at the one or more network resources. If the access node is capable of using more than one receive beam at the one or more network resources, the scheduling grant may include information about the one or more receive beams.

The scheduling grant may also include information about a transmit beam to be used by the UE at the one or more network resources. The information about the transmit beam to be used by the UE may comprise an index of the transmit beam to be used by the UE at the one or more network resources. If the UE is capable of using more than one transmit beam at the one or more network resources, the scheduling grant may include information about the one or more transmit beams. The transmit beam may be selected by the access node in accordance with the SRS received in the SRS resources (block 613, for example). The information about the transmit beam to be used by the UE may be used by the UE to select its own transmit beam. Alternatively, the UE may be forced to use the transmit beam specified in the scheduling grant.

The scheduling grant may also include other information, including information about a modulation scheme to be used in the uplink transmission, a transmission scheme to be used in the uplink transmission, and so on.

Figure 7 illustrates an example scheduling grant information 700. Scheduling grant information 700 is presented in tabular form. Other presentations of scheduling grant information 700 are possible. Scheduling grant information 700 includes position information of PRBs (e.g., PRB position 705), an index of an access node receive beam (e.g., receive beam index 707), an index of a UE transmit beam (optional) (e.g., transmit beam index 709), and other information (optional) (e.g., other parameters 711).

Referring back now to Figure 6A, the access node transmits information about the scheduling grant to the UE (block 617). The transmission may be specifically addressed to the UE. The access node receives an uplink transmission on the one or more network resources allocated for the uplink transmission (block 619).

Figure 6B illustrates a flow diagram of example operations 650 occurring in a UE making an uplink transmission. Operations 650 may be indicative of operations occurring in a UE as the UE makes an uplink transmission.

Operations 650 begin with the UE receiving a SRS resource configuration from an access node (block 655). The SRS resource configuration may include position information of SRS resources, information about a receive beam used by the access node to receive the SRS sequence, and/or information about a transmit beam used by the UE to transmit the SRS sequence. The UE determines a transmit beam (block 657). The UE may determine the transmit beam based on information about a receive beam used by the access node to receive the SRS sequence included in the SRS resource configuration. The UE may use the information about a transmit beam to be used by the UE as selected by the access node (also included in the SRS resource configuration). The UE may use the transmit beam selected by the access node. Alternatively, the UE uses information about the transmit beam selected by the access node to select a transmit beam. In other words, the UE uses the transmit beam selected by the access node to assist in making a decision about which transmit beam to use. The UE transmits a SRS sequence on the SRS resources (block 659). The SRS sequence may be a non-information bearing SRS sequence or an information bearing SRS sequence. In a situation where the SRS sequence is an information bearing SRS sequence, the UE selects an SRS sequence out of N SRS sequences in order to convey up to log2(N) bits of information.

The UE receives information about a scheduling grant for an uplink transmission (block 661). The scheduling grant includes position information for one or more network resources allocated for the uplink transmission, information about a receive beam used by the access node at the one or more network resources, (optionally) information about a transmit beam to be used by the UE at the one or more network resources, and (optionally) other information, including information about a modulation scheme to be used in the uplink transmission, a transmission scheme to be used in the uplink transmission, and so on. The UE selects a transmit beam and other transmission parameters to make the uplink transmission (block 663). The UE may select the transmit beam in accordance with the information about the receive beam used by the access node at the one or more network resources, and potentially, the information about the transmit beam to be used by the UE at the one or more network resources. In the situation where the UE has information about the transmit beam to be used by the UE at the one or more network resources indicated by the access node, the UE may use the indicated information to assist in the selection of the transmit beam. In other words, the UE may use the indicated information to assist in the selection of the transmit beam, the UE may not be required to use the transmit beam as indicted. The UE makes the uplink transmission using the selected transmit beam at the one or more network resources (block 665). The uplink transmission may be made in accordance with the other transmission parameters selected by the UE.

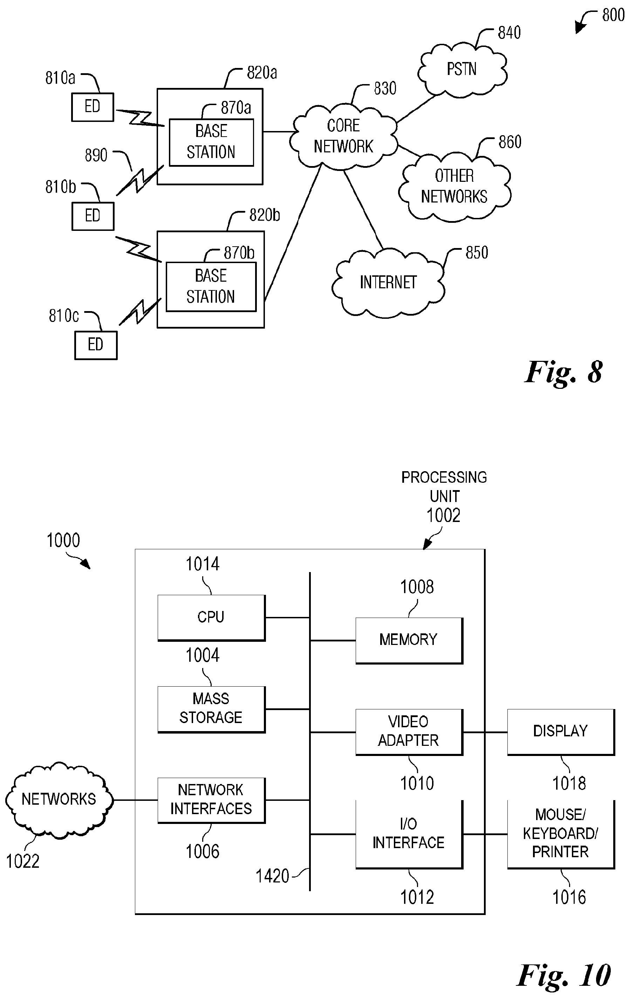

Figure 8 illustrates an example communication system 800. In general, the system 800 enables multiple wireless or wired users to transmit and receive data and other content. The system 800 may implement one or more channel access methods, such as code division multiple access (CDMA), time division multiple access (TDMA), frequency division multiple access (FDMA), orthogonal FDMA (OFDMA), single-carrier FDMA (SC-FDMA), or non-orthogonal multiple access (NOMA).

In this example, the communication system 800 includes electronic devices (ED) 810a-810c, radio access networks (RANs) 820a-820b, a core network 830, a public switched telephone network (PSTN) 840, the Internet 850, and other networks 860. While certain numbers of these components or elements are shown in Figure 8, any number of these components or elements may be included in the system 800.

The EDs 810a-810c are configured to operate and/or communicate in the system 800. For example, the EDs 810a-810c are configured to transmit and/or receive via wireless or wired communication channels. Each ED 810a-810c represents any suitable end user device and may include such devices (or may be referred to) as a user equipment/device (UE), wireless transmit/receive unit (WTRU), mobile station, fixed or mobile subscriber unit, cellular telephone, personal digital assistant (PDA), smartphone, laptop, computer, touchpad, wireless sensor, or consumer electronics device.

The RANs 820a-820b here include base stations 870a-870b, respectively. Each base station 870a-870b is configured to wirelessly interface with one or more of the EDs 810a-810c to enable access to the core network 830, the PSTN 840, the Internet 850, and/or the other networks 860. For example, the base stations 870a-870b may include (or be) one or more of several well-known devices, such as a base transceiver station (BTS), a Node-B (NodeB), an evolved NodeB (eNodeB), a Home NodeB, a Home eNodeB, a site controller, an access point (AP), or a wireless router. The EDs 810a-810c are configured to interface and communicate with the Internet 850 and may access the core network 830, the PSTN 840, and/or the other networks 860.

In the embodiment shown in Figure 8, the base station 870a forms part of the RAN 820a, which may include other base stations, elements, and/or devices. Also, the base station 870b forms part of the RAN 820b, which may include other base stations, elements, and/or devices. Each base station 870a-870b operates to transmit and/or receive wireless signals within a particular geographic region or area, sometimes referred to as a "cell." In some embodiments, multiple-input multiple-output (MIMO) technology may be employed having multiple transceivers for each cell.

The base stations 870a-870b communicate with one or more of the EDs 810a-810c over one or more air interfaces 890 using wireless communication links. The air interfaces 1290 may utilize any suitable radio access technology.

It is contemplated that the system 800 may use multiple channel access functionality, including such schemes as described above. In particular embodiments, the base stations and EDs implement LTE, LTE-A, and/or LTE-B. Of course, other multiple access schemes and wireless protocols may be utilized.

The RANs 820a-820b are in communication with the core network 830 to provide the EDs 810a-810c with voice, data, application, Voice over Internet Protocol (VoIP), or other services. Understandably, the RANs 820a-820b and/or the core network 830 may be in direct or indirect communication with one or more other RANs (not shown). The core network 830 may also serve as a gateway access for other networks (such as the PSTN 840, the Internet 850, and the other networks 860). In addition, some or all of the EDs 810a-810c may include functionality for communicating with different wireless networks over different wireless links using different wireless technologies and/or protocols. Instead of wireless communication (or in addition thereto), the EDs may communicate via wired communication channels to a service provider or switch (not shown), and to the Internet 850.

Although Figure 8 illustrates one example of a communication system, various changes may be made to Figure 8. For example, the communication system 800 could include any number of EDs, base stations, networks, or other components in any suitable configuration.

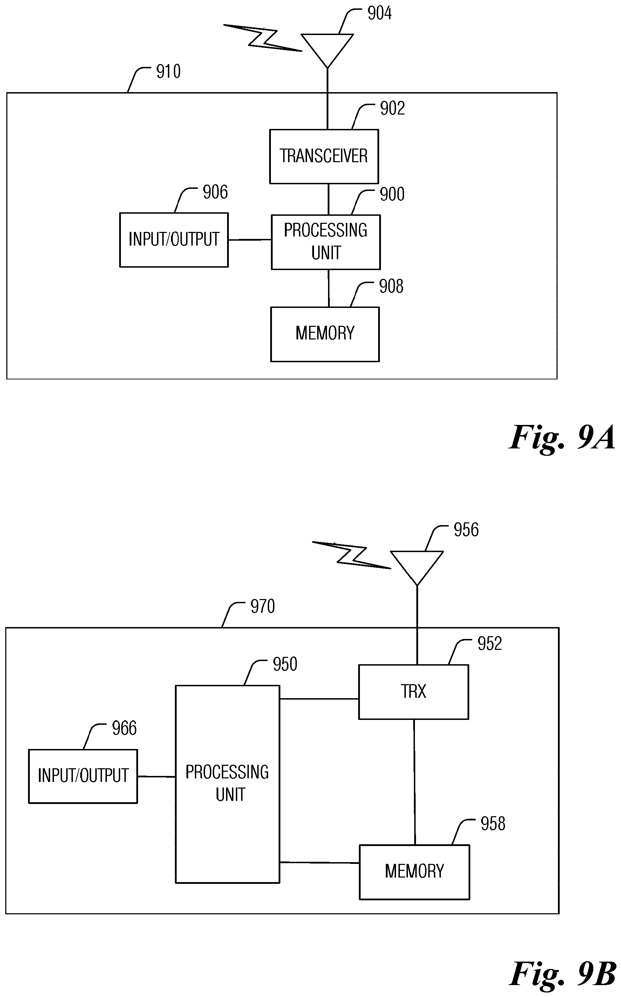

Figures 9A and 9B illustrate example devices that may implement the methods and teachings according to this disclosure. In particular, Figure 9A illustrates an example ED 910, and Figure 9B illustrates an example base station 970. These components could be used in the system 800 or in any other suitable system.

As shown in Figure 9A, the ED 910 includes at least one processing unit 900. The processing unit 900 implements various processing operations of the ED 910. For example, the processing unit 900 could perform signal coding, data processing, power control, input/output processing, or any other functionality enabling the ED 910 to operate in the system 800. The processing unit 900 also supports the methods and teachings described in more detail above. Each processing unit 900 includes any suitable processing or computing device configured to perform one or more operations. Each processing unit 900 could, for example, include a microprocessor, microcontroller, digital signal processor, field programmable gate array, or application specific integrated circuit.

The ED 910 also includes at least one transceiver 902. The transceiver 902 is configured to modulate data or other content for transmission by at least one antenna or NIC (Network Interface Controller) 904. The transceiver 902 is also configured to demodulate data or other content received by the at least one antenna 904. Each transceiver 902 includes any suitable structure for generating signals for wireless or wired transmission and/or processing signals received wirelessly or by wire. Each antenna 904 includes any suitable structure for transmitting and/or receiving wireless or wired signals. One or multiple transceivers 902 could be used in the ED 910, and one or multiple antennas could be used in the ED 910. Although shown as a single functional unit, a transceiver 902 could also be implemented using at least one transmitter and at least one separate receiver.

The ED 910 further includes one or more input/output devices 906 or interfaces (such as a wired interface to the Internet 850). The input/output devices 906 facilitate interaction with a user or other devices (network communications) in the network. Each input/output device 906 includes any suitable structure for providing information to or receiving/providing information from a user, such as a speaker, microphone, keypad, keyboard, display, or touch screen, including network interface communications.

In addition, the ED 910 includes at least one memory 908. The memory 908 stores instructions and data used, generated, or collected by the ED 910. For example, the memory 908 could store software or firmware instructions executed by the processing unit(s) 900 and data used to reduce or eliminate interference in incoming signals. Each memory 908 includes any suitable volatile and/or non-volatile storage and retrieval device(s). Any suitable type of memory may be used, such as random access memory (RAM), read only memory (ROM), hard disk, optical disc, subscriber identity module (SIM) card, memory stick, secure digital (SD) memory card, and the like.

As shown in Figure 9B, the base station 970 includes at least one processing unit 950, at least one transceiver 952, which includes functionality for a transmitter and a receiver, one or more antennas 956, at least one memory 958, and one or more input/output devices or interfaces 966. A scheduler, which would be understood by one skilled in the art, is coupled to the processing unit 950. The scheduler could be included within or operated separately from the base station 970. The processing unit 950 implements various processing operations of the base station 970, such as signal coding, data processing, power control, input/output processing, or any other functionality. The processing unit 950 can also support the methods and teachings described in more detail above. Each processing unit 950 includes any suitable processing or computing device configured to perform one or more operations. Each processing unit 950 could, for example, include a microprocessor, microcontroller, digital signal processor, field programmable gate array, or application specific integrated circuit.

Each transceiver 952 includes any suitable structure for generating signals for wireless or wired transmission to one or more EDs or other devices. Each transceiver 952 further includes any suitable structure for processing signals received wirelessly or by wire from one or more EDs or other devices. Although shown combined as a transceiver 952, a transmitter and a receiver could be separate components. Each antenna 956 includes any suitable structure for transmitting and/or receiving wireless or wired signals. While a common antenna 956 is shown here as being coupled to the transceiver 952, one or more antennas 956 could be coupled to the transceiver(s) 952, allowing separate antennas 956 to be coupled to the transmitter and the receiver if equipped as separate components. Each memory 958 includes any suitable volatile and/or non-volatile storage and retrieval device(s). Each input/output device 966 facilitates interaction with a user or other devices (network communications) in the network. Each input/output device 966 includes any suitable structure for providing information to or receiving/providing information from a user, including network interface communications.

Figure 10 is a block diagram of a computing system 1000 that may be used for implementing the devices and methods disclosed herein. For example, the computing system can be any entity of UE, access network (AN), mobility management (MM), session management (SM), user plane gateway (UPGW), and/or access stratum (AS). Specific devices may utilize all of the components shown or only a subset of the components, and levels of integration may vary from device to device. Furthermore, a device may contain multiple instances of a component, such as multiple processing units, processors, memories, transmitters, receivers, etc. The computing system 1000 includes a processing unit 1002. The processing unit includes a central processing unit (CPU) 1014, memory 1008, and may further include a mass storage device 1004, a video adapter 1010, and an I/O interface 1012 connected to a bus 1420.

The bus 1420 may be one or more of any type of several bus architectures including a memory bus or memory controller, a peripheral bus, or a video bus. The CPU 1014 may comprise any type of electronic data processor. The memory 1008 may comprise any type of non-transitory system memory such as static random access memory (SRAM), dynamic random access memory (DRAM), synchronous DRAM (SDRAM), read-only memory (ROM), or a combination thereof. In an embodiment, the memory 1008 may include ROM for use at boot-up, and DRAM for program and data storage for use while executing programs.

The mass storage 1004 may comprise any type of non-transitory storage device configured to store data, programs, and other information and to make the data, programs, and other information accessible via the bus 1420. The mass storage 1004 may comprise, for example, one or more of a solid state drive, hard disk drive, a magnetic disk drive, or an optical disk drive.

The video adapter 1010 and the I/O interface 1012 provide interfaces to couple external input and output devices to the processing unit 1002. As illustrated, examples of input and output devices include a display 1018 coupled to the video adapter 1010 and a mouse/keyboard/printer 1016 coupled to the I/O interface 1012. Other devices may be coupled to the processing unit 1002, and additional or fewer interface cards may be utilized. For example, a serial interface such as Universal Serial Bus (USB) (not shown) may be used to provide an interface for an external device.

The processing unit 1002 also includes one or more network interfaces 1006, which may comprise wired links, such as an Ethernet cable, and/or wireless links to access nodes or different networks. The network interfaces 1006 allow the processing unit 1002 to communicate with remote units via the networks. For example, the network interfaces 1006 may provide wireless communication via one or more transmitters/transmit antennas and one or more receivers/receive antennas. In an embodiment, the processing unit 1002 is coupled to a local-area network 1022 or a wide-area network for data processing and communications with remote devices, such as other processing units, the Internet, or remote storage facilities.

It should be appreciated that one or more steps of the embodiment methods provided herein may be performed by corresponding units or modules. For example, a signal may be transmitted by a transmitting unit or a transmitting module. A signal may be received by a receiving unit or a receiving module. A signal may be processed by a processing unit or a processing module. Other steps may be performed by a selecting unit/module, a making unit/module, an estimating unit/module, and/or a configuring unit/module. The respective units/modules may be hardware, software, or a combination thereof. For instance, one or more of the units/modules may be an integrated circuit, such as field programmable gate arrays (FPGAs) or application-specific integrated circuits (ASICs).

Although the present disclosure and its advantages have been described in detail, it should be understood that various changes, substitutions and alterations can be made herein without departing from the scope of the disclosure as defined by the appended claims.

## Claims

1. A method for transmitting information bearing sounding reference signals, SRSs, in a fifth generation, 5G, New Radio system architecture, the method comprising:
receiving (455) from an access node, by an uncalibrated user equipment, UE, a resource configuration for at least one network resource allocated for transmitting SRSs, the resource configuration comprising beam information of a receive beam used by the access node for receiving on each network resource of the at least one network resource and beam information of a transmit beam used by the UE for transmitting on each network resource of the at least one network resource; and
for each network resource of the at least one network resource,
determining, by the UE, a transmit beam based on the beam information of the receive beam and the beam information of the transmit beam indicated by the access node, wherein the beam information of the receive beam used by the access node comprises an index of the receive beam, and when codebook beamforming is used by the access node, knowledge of the index allows the UE to know the orientation of the receive beam used by the access node, and the UE selects a transmit beam to match the orientation of the receive beam,
selecting (459), by the UE, a SRS sequence from a plurality of N SRS sequences available to the UE in accordance with information to be conveyed in the network resource, wherein the plurality of N SRS sequences is associated with the network resource,
transmitting (461), by the UE, the selected SRS sequence on the network resource, and
upon detecting, by the access node, which one of of the N SRS sequences was transmitted by the UE, recovering log2(N) bits of information from the received SRS sequence.

2. The method of claim 1,
wherein the resource configuration further comprises the plurality of sounding reference signals associated with each network resource of the at least one network resource.

3. A method for operating an access node in a fifth generation, 5G, New Radio system architecture, the method comprising:
configuring (405), by the access node, at least one network resource allocated for transmitting sounding reference signals, SRSs;
sending (407) to an uncalibrated user equipment, UE, by the access node, resource configuration for the at least one network resource allocated for transmitting SRSs, the resource configuration comprising beam information of a receive beam used by the access node for receiving on each network resource of the at least one network resource and beam information of a transmit beam used by the UE for transmitting on each network resource of the at least one network resource, wherein the resource configuration comprises beam information of a receive beam used by the access node for receiving on each network resource of the at least one network resource allocated for transmitting SRSs and beam information of a transmit beam used by the UE for transmitting on each network resource of the at least one network resource allocated for transmitting sounding reference signals,
wherein the beam information of the receive beam used by the access node comprises an index of the receive beam;
receiving (409), by the access node, a SRS sequence selected by the UE from a plurality of N SRS sequences available to the UE on each network resource of the at least one network resource allocated for transmitting SRSs; and
recovering (413), by the access node, information from the SRS received on each network resource of the at least one network resource allocated for transmitting SRSs by detecting (411), by the access node, which one of the N SRS sequences was transmitted by the UE, and recovering log2(N) bits of information from the received SRS sequence.

4. The method of claim 3, further comprising: selecting, by the access node, the receive beam used by the access node to receive an uplink transmission;
selecting, by the access node, the transmit beam to be used by the UE to transmit the uplink transmission.

5. A system comprising an uncalibrated user equipment (110-116), UE, and an access node (105), **characterized in that** the system is configured to implement the method according to claim 1 or 2.

6. An access node (105), **characterized in that** the access node is configured to implement the method according to any one of claims 3 to 4.

## Patentansprüche

1. Verfahren zum Übertragen von Informationen mit Sondierungsreferenzsignalen (SRS) in einer New Radio-Systemarchitektur der fünften Generation (5G), wobei das Verfahren Folgendes umfasst:
Empfangen (455) einer Ressourcenkonfiguration für mindestens eine Netzwerkressource, die zum Übertragen von SRS zugewiesen ist, von einem Zugangsknoten durch ein nicht kalibriertes Benutzergerät (UE - User Equipment), wobei die Ressourcenkonfiguration Strahlinformationen eines Empfangsstrahls umfasst, der von dem Zugangsknoten zum Empfangen auf jeder Netzwerkressource der mindestens einen Netzwerkressource verwendet wird, und Strahlinformationen eines Übertragungsstrahls, der von dem UE zum Übertragen auf jeder Netzwerkressource der mindestens einen Netzwerkressource verwendet wird; und
für jede Netzwerkressource der mindestens einen Netzwerkressource,
Bestimmen eines Übertragungsstrahls durch das UE auf Grundlage der Strahlinformationen des Empfangsstrahls und der Strahlinformationen des von dem Zugangsknoten angegebenen Übertragungsstrahls, wobei die Strahlinformationen des von dem Zugangsknoten verwendeten Empfangsstrahls einen Index des Empfangsstrahls umfassen, und wenn von dem Zugangsknoten Codebook-Strahlformung verwendet wird, die Kenntnis des Index dem UE ermöglicht, die Ausrichtung des von dem Zugangsknoten verwendeten Empfangsstrahls zu kennen, und das UE einen Übertragungsstrahl auswählt, der der Ausrichtung des Empfangsstrahls entspricht,
Auswählen (459) einer SRS-Sequenz durch das UE aus einer Vielzahl von N SRS-Sequenzen, die dem UE zur Verfügung steht, gemäß in der Netzwerkressource zu übermittelnden Informationen, wobei die Vielzahl von N SRS-Sequenzen der Netzwerkressource zugeordnet ist,
Übertragen (461) der ausgewählten SRS-Sequenz auf der Netzwerkressource durch das UE und
nachdem der Zugangsknoten erkannt hat, welche der N SRS-Sequenzen von dem UE übertragen wurde, Wiederherstellen von log2(N) Informationsbits aus der empfangenen SRS-Sequenz.

2. Verfahren nach Anspruch 1,
wobei die Ressourcenkonfiguration ferner die Vielzahl von Sondierungsreferenzsignalen umfasst, die jeder Netzwerkressource der mindestens einen Netzwerkressource zugeordnet ist.

3. Verfahren zum Betreiben eines Zugangsknotens in einer New Radio-Systemarchitektur der fünften Generation (5G), wobei das Verfahren Folgendes umfasst:
Konfigurieren (405) mindestens einer Netzwerkressource, die zum Übertragen von Sondierungsreferenzsignalen (SRS) zugewiesen ist, durch den Zugangsknoten;
Senden (407) einer Ressourcenkonfiguration für die mindestens eine Netzwerkressource, die zum Übertragen von SRS zugewiesen ist, durch den Zugangsknoten an ein nicht kalibriertes Benutzergerät (UE), wobei die Ressourcenkonfiguration Strahlinformationen eines Empfangsstrahls umfasst, der von dem Zugangsknoten zum Empfangen auf jeder Netzwerkressource der mindestens einen Netzwerkressource verwendet wird, und Strahlinformationen eines Übertragungsstrahls, der von dem UE zum Übertragen auf jeder Netzwerkressource der mindestens einen Netzwerkressource verwendet wird, wobei die Ressourcenkonfiguration Strahlinformationen eines Empfangsstrahls umfasst, der von dem Zugangsknoten zum Empfangen auf jeder Netzwerkressource der mindestens einen zum Übertragen von SRS zugewiesenen Netzwerkressource verwendet wird, und Strahlinformationen eines Übertragungsstrahls umfasst, der von dem UE zum Übertragen auf jeder Netzwerkressource der mindestens einen zum Übertragen von SRS zugewiesenen Netzwerkressource verwendet wird,
wobei die Strahlinformationen des von dem Zugangsknoten verwendeten Empfangsstrahls einen Index des Empfangsstrahls umfassen;
Empfangen (409) einer SRS-Sequenz, die von dem UE aus einer Vielzahl von N SRS-Sequenzen ausgewählt wurde, die dem UE auf jeder Netzwerkressource der mindestens einen zum Übertragen von SRS zugewiesenen Netzwerkressource zur Verfügung steht, durch den Zugangsknoten; und
Wiederherstellen (413) von Informationen aus dem SRS, das auf jeder Netzwerkressource der mindestens einen zum Übertragen von SRS zugewiesenen Netzwerkressource empfangen wurde, durch den Zugangsknoten, indem der Zugangsknoten erkennt (411), welche der N SRS-Sequenzen von dem UE übertragen wurde, und Wiederherstellen von log2(N) Informationsbits aus der empfangenen SRS-Sequenz.

4. Verfahren nach Anspruch 3, ferner umfassend: Auswählen des Empfangsstrahls, der von dem Zugangsknoten zum Empfangen einer Uplink-Übertragung verwendet wird, durch den Zugangsknoten; Auswählen des Übertragungsstrahls, der von dem UE zum Übertragen der Uplink-Übertragung verwendet werden soll, durch den Zugangsknoten.

5. System, das ein nicht kalibriertes Benutzergerät (UE) (110-116) und einen Zugangsknoten (105) umfasst, **dadurch gekennzeichnet, dass** das System dazu konfiguriert ist, das Verfahren nach Anspruch 1 oder 2 durchzuführen.

6. Zugangsknoten (105), **dadurch gekennzeichnet, dass** der Zugangsknoten zum Durchführen des Verfahrens nach einem der Ansprüche 3 bis 4 konfiguriert ist.

## Revendications

1. Procédé de transmission d'informations portant des signaux de référence de sondage, SRS, dans une architecture de système New Radio de cinquième génération, 5G, le procédé comprenant :
la réception (455) provenant d'un noeud d'accès, par un équipement utilisateur, UE, non calibré d'une configuration de ressources pour au moins une ressource de réseau allouée pour transmettre des SRS, la configuration de ressources comprenant des informations de faisceau d'un faisceau de réception utilisé par le noeud d'accès pour recevoir sur chaque ressource de réseau de l'au moins une ressource de réseau et des informations de faisceau d'un faisceau d'émission utilisé par l'UE pour transmettre sur chaque ressource de réseau de l'au moins une ressource réseau ; et
pour chaque ressource de réseau de l'au moins une ressource de réseau,
la détermination, par l'UE, d'un faisceau d'émission sur la base des informations de faisceau du faisceau de réception et des informations de faisceau du faisceau d'émission indiquées par le noeud d'accès, dans lequel les informations de faisceau du faisceau de réception utilisées par le noeud d'accès comprennent un indice du faisceau de réception, et lorsque la formation de faisceau à livre de codes est utilisée par le noeud d'accès, la connaissance de l'indice permet à l'UE de connaître l'orientation du faisceau de réception utilisé par le noeud d'accès, et l'UE sélectionne un faisceau d'émission pour correspondre à l'orientation du faisceau de réception,
la sélection (459), par l'UE, d'une séquence SRS parmi une pluralité de N séquences SRS disponibles pour l'UE conformément aux informations à transmettre dans la ressource de réseau, dans lequel la pluralité de N séquences SRS est associée à la ressource de réseau,
la transmission (461), par l'UE, de la séquence SRS sélectionnée sur la ressource de réseau, et
après détection, par le noeud d'accès, laquelle des N séquences SRS a été transmise par l'UE, la récupération de log2(N) bits d'informations à partir de la séquence SRS reçue.

2. Procédé selon la revendication 1,
dans lequel la configuration de ressources comprend également la pluralité de signaux de référence de sondage associés à chaque ressource de réseau de l'au moins une ressource de réseau.

3. Procédé d'exploitation d'un noeud d'accès dans une architecture de système New Radio de cinquième génération, 5G, le procédé comprenant :
la configuration (405), par le noeud d'accès, d'au moins une ressource de réseau allouée pour transmettre des signaux de référence de sondage, SRS ;
l'envoi (407) à un équipement utilisateur, UE, non calibré par le noeud d'accès, d'une configuration de ressources pour l'au moins une ressource de réseau allouée pour transmettre des SRS, la configuration de ressources comprenant des informations de faisceau d'un faisceau de réception utilisé par le noeud d'accès pour la réception sur chaque ressource de réseau de l'au moins une ressource de réseau et des informations de faisceau d'un faisceau d'émission utilisé par l'UE pour transmettre sur chaque ressource de réseau de l'au moins une ressource de réseau, dans lequel la configuration de ressources comprend des informations de faisceau d'un faisceau de réception utilisé par le noeud d'accès pour la réception sur chaque ressource de réseau de l'au moins une ressource de réseau allouée pour transmettre des SRS et des informations de faisceau d'un faisceau d'émission utilisé par l'UE pour transmettre sur chaque ressource de réseau de l'au moins une ressource de réseau allouée pour transmettre des signaux de référence de sondage,
dans lequel les informations de faisceau du faisceau de réception utilisées par le noeud d'accès comprennent un indice du faisceau de réception ;
la réception (409), par le noeud d'accès, d'une séquence SRS sélectionnée par l'UE parmi une pluralité de N séquences SRS disponibles pour l'UE sur chaque ressource de réseau de l'au moins une ressource de réseau allouée pour transmettre des SRS ; et
la récupération (413), par le noeud d'accès, d'informations provenant du SRS reçues sur chaque ressource de réseau de l'au moins une ressource de réseau allouée pour transmettre des SRS en détectant (411), par le noeud d'accès, laquelle des N séquences SRS a été transmise par l'UE, et la récupération de log2(N) bits d'informations à partir de la séquence SRS reçue.

4. Procédé selon la revendication 3, comprenant également : la sélection, par le noeud d'accès, du faisceau de réception utilisé par le noeud d'accès pour recevoir une transmission de liaison montante ;
la sélection, par le noeud d'accès, du faisceau d'émission à utiliser par l'UE pour transmettre la transmission de liaison montante.

5. Système comprenant un équipement utilisateur, UE, non calibré (110-116), et un noeud d'accès (105), **caractérisé en ce que** le système est configuré pour mettre en œuvre le procédé selon la revendication 1 ou 2.

6. Noeud d'accès (105), **caractérisé en ce que** le noeud d'accès est configuré pour mettre en œuvre le procédé selon l'une quelconque des revendications 3 à 4.
